# EUROPEAN PATENT APPLICATION

(11) **EP 2 816 521 A1**
(43) Date of publication of application: **24.12.2014**
(21) Application number: 14151653.4
(22) Date of filing: 17.01.2014
(51) Int. Cl.: G06Q 30/06

(54) **Editing method of the three-dimensional shopping platform display interface for users**

(30) Priority: 17.06.2013 CN 201310240039; 31.12.2013 WO PCT/CN2013/091037
(71) Applicant: Spreadtrum Communications (Shanghai) Co., Ltd., Zhangjiang High Tech Park Pudong District Shanghai 201203 (CN)
(72) Inventor: Xia, Lu, 201203 Pudongzinqu Shanghai (CN); Jin, Hengzhuang, 201203 Pudongxinqu Shanghai (CN); Liu, Haipeng, 201203 Pudongxinqu Shanghai (CN)
(74) Representative: Miller Sturt Kenyon

(57) **Abstract**

The present invention discloses an editing method of the three-dimensional shopping platform display interface, which belongs to the technical fields of editing method of the display interface. The three-dimensional shopping platform is displayed on the mobile terminal by a three-dimensional shopping platform display system. The three-dimensional shopping platform display system comprises a three-dimensional model. The editing method specifically includes the following steps: Step 1, the three-dimensional shopping platform display system enters into the user editing mode; Step 2, the three-dimensional shopping platform display system acquires the user's editing operation from the image display interface by a pointing device; Step 3, according to the editing operation, the three-dimensional shopping platform display system adjusts the basic data by a configure unit; Step 4, according to the modified basic data and the modified model unit, the three-dimensional shopping platform display system forms a new three-dimensional model, and displays the new image data in the image display interface. The beneficial effects of the present invention are that as follows: achieving the editability of the three-dimensional shopping platform display interface for users and improving the shopping experience thereof.

## Description

### TECHNICAL FIELD

The present invention relates to the technical field of an editing method of the shopping platform display interface, more specifically, to an editing method of the three-dimensional shopping platform display interface for users.

### BACKGROUND OF THE INVENTION

With the rapid development of the computer technology and the network technology, the indoor shopping by the online shopping platform has been widely accepted and has become a new economic growth point for the consumption promotion. In comparison with the traditional shopping method, there are a plurality of advantages of the shopping by the online shopping platform. For example, when shopping on the online platform, the user just needs to input the name of the commodity, the relevant commodity will be found rapidly and consequently, the user can compare and select the same. However, when shopping in the physical stores, the people may probably not find the products even after spending a lot of time and efforts.

The online shopping platform generally displays in a two-dimensional plane. The user can acquire the information about the online platform, the online shops and the products, where the display is with a certain intuition. However, there are some defects in the display in the two-dimensional plane. For example, the display is just a two-dimensional display, the products is illustrated by pictures and characters. Consequently, the entire information of the products, such as three-dimensional appearance thereof, can not be completely presented to the user. Hence, the user will not understand the product entirely, which may cause some misunderstanding about the product. Moreover, the switching of the web site occurs in the display of the two-dimensional plane, which may cause an interrupted feeling for the user during the display and will not result in a real shopping experience. On the other hand, when online shopping by the two-dimensional display interface, the user needs to input the search instruction by the key board or the touch screen and to perform the operations of viewing or buying by clicking the displayed products.

Chinese Patent Publication No. CN102405485A has disclosed a stereoscopic display system. It relates to a stereoscopic display system which outputs the three-dimensional visible document to the stereoscopic image display unit according to the three-dimensional objects edited by the two-dimensional objects, such as the characters, the images, the charts, and the film. According to the three-dimensional display system of the embodiment of the disclosure, it comprises: a two-dimensional object editing unit for editing the characters, the images, the charts, and the film; a three-dimensional object editing unit for editing the three-dimensional objects which has a preconfigured binocular disparity according to the input two-dimensional objects; a three-dimensional object storage unit for storing the three-dimensional objects; and a three-dimensional image display unit for outputting the three-dimensional objects stored in the three-dimensional object storage unit. The above patent technology mentioned above is a method for realizing the three-dimensional presentation by editing the two-dimensional images. It does not comprise the idea of the three-dimensional shopping platform and the specific editing methods of the display interface.

Chinese patent Publication No. CN101178817A has disclosed a method based on the three-dimensional information presentation in the three-dimensional scene. The invention comprises: initiating the three-dimensional graph render engine to load the scenario template library, the object library and performing real-time rendering; accelerating the real-time rendering efficiency by using the cone scene scalping method based on radar path planner; configuring the three-dimensional demo documents through the three-dimensional slide generation setting system; inputting and editing words in the three-dimensional slide through the word input and edit system; sharpening the words through the scare texture process system; connecting the three-dimensional slide into a three-dimensional demo documents; saving the content of the three-dimensional demo documents into a special format through the three-dimensional demo documents content format interface. The patent technology mentioned above is a method of the presentation of the three-dimensional information in the three-dimensional scene, but it does not comprise a method to achieve online shopping platform by the three-dimensional graphics and the editing method of the three-dimensional interface.

### SUMMARY OF THE INVENTION

Due to the above technical problems, the present invention provides an editing method of the three-dimensional shopping platform display interface for users to achieve the editability of the three-dimensional shopping platform display interface for users.

The specific technical solutions are as follows:
An editing method of the three-dimensional shopping platform display interface for users is provided, the three-dimensional shopping platform is displayed on the mobile terminals by a three-dimensional shopping platform display system; wherein the three-dimensional shopping platform display system comprises a three-dimensional model;
the three-dimensional shopping platform display system comprises a display module which is defined with an image display interface with a preconfigured size; the image display interface is configured on a display device of the mobile terminal which is provided with a pointing device;
the three-dimensional shopping platform display system comprises a memory module which is preconfigured with the model unit of the three-dimensional shopping platform and the basic data for assembling the three-dimensional model; the three-dimensional shopping platform display system forms different three-dimensional models according to the basic data and the model unit;
the three-dimensional shopping platform display system comprises an editing module which comprises a configure unit for configuring the basic data;
the editing method of the three-dimensional shopping platform display interface includes the following steps:
   Step 1, the three-dimensional shopping platform display system enters into the user editing mode;
   Step 2, the three-dimensional shopping platform display system acquires the user's editing operation from the image display interface by the pointing device;
   Step 3, according to the editing operation, the three-dimensional shopping platform display system adjusts the basic data by the configure unit;
   Step 4, according to the modified basic data and the model unit, the three-dimensional shopping platform display system forms a new three-dimensional model, and displays the new image data in the image display interface.

Preferably, according to the above editing method, wherein the memory module of the three-dimensional shopping platform display system locally stores the basic data used for assembling the three-dimensional model with the model unit.

Preferably, according to the above editing method, wherein the three-dimensional shopping platform display system further comprises a communication module; the three-dimensional shopping platform is connected with the external server remotely by the communication module; the external server stores the terminal information of different mobile terminals; the terminal information comprises the terminal identification of the mobile terminal and the basic data relevant to the terminal identification.

Preferably, according to the above editing method, wherein an operating area is defined on the user display interface by the display module and the operating area is used for receiving the selection instruction of users in the display interface;
Step 1 specifically includes:
Step 11, the operating area receives the selection instruction of users by the pointing device;
Step 12, the three-dimensional shopping platform display system enters into the user editing mode according to the selection instruction of users.

Preferably, according to the above editing method, wherein the pointing device comprises a track determining component, the pointing device determines the direction of the track of the editing operation by the track determining component.

Preferably, according to the above editing method, wherein the editing module further comprises a demonstration unit; Step 4 includes the following steps:
Step 41, the three-dimensional shopping platform display system forms a new three-dimensional model according to the combination of the modified basic data and the model unit;
Step 42, the three-dimensional shopping platform display system shows the changes of the position of the model unit on the new three-dimensional model in the preconfigured mode by the demonstration unit on the image display interface.

Preferably, according to the above editing method, wherein a plurality of identification areas relevant to the model unit of the three-dimensional model are defined in the image display interface;
when the pointing device determines that the editing operation is located in the identification areas and the track of the operation thereof matches the first preconfigured operation, the three-dimensional shopping platform display system will change the basic data by the configure unit; thereby the three-dimensional shopping platform display system deletes the model unit relevant to the identification area on the three-dimensional model and correspondingly adjusts the position of the other model unit on the three-dimensional model in the image display interface.

Preferably, according to the above editing method, wherein the image display interface comprises a plurality of identification areas relevant to the display area of the model unit;
when the pointing device determines that the editing operation is located between the identification areas and the track of the operation thereof matches the a second preconfigured operation, the three-dimensional shopping platform display system changes the basic data by the configure unit; the three-dimensional shopping platform display system adds the model unit at the corresponding position on the three-dimensional model between the corresponding identification areas and adjusts the position on the three-dimensional model of the other model unit in the image display interface correspondingly.

Preferably, according to the above editing method, wherein the model unit is arranged in ranks on the three-dimensional models; the preconfigured mode of Step 42 is that when the three-dimensional shopping platform display system deletes the model unit on the three-dimensional model,
the model unit which belongs to the same column with the deleted model unit and is located behind the deleted model unit moves forward for a preconfigured distance; or
the model unit which belongs to the same column with the deleted model unit and is located at the front of the deleted model unit moves rearward for a preconfigured distance; or
the model unit which belongs to the same column with the deleted model unit and is located in the left side of the deleted model unit moves for a preconfigured distance toward the right; or
the model unit which belongs to the same column with the deleted model unit and is located in the right side of the deleted model unit moves for a preconfigured distance toward the left.

Preferably, according to the above editing method, wherein the model unit is arranged in ranks on the three-dimensional models; the preconfigured mode of Step 42 is that when the three-dimensional shopping platform display system adds the model unit on the three-dimensional model,
the model unit which belongs to the same column with the added model unit and is located behind the added model unit moves rearward for a preconfigured distance; or
the model unit which belongs to the same column with the added model unit and is located at the front of the added model unit moves for forward a preconfigured distance; or
the model unit which belongs to the same column with the added model unit and is located in the left side of the added model unit moves for a preconfigured distance toward the left; or
the model unit which belongs to the same column with the added model unit and is located in the right side of the added model unit moves for a preconfigured distance toward the right.

Preferably, according to the above editing method, wherein the direction of the first preconfigured operation is downward to the track direction of the editing operation.

Preferably, according to the above editing method, wherein the direction of the second preconfigured operation is upward to the track direction of the editing operation.

The beneficial effects of the present invention are that as follows: It is convenient for users to edit the three-dimensional shopping platform display interface by the settings of the three-dimensional shopping platform display interface as needed on the mobile terminals. Consequently, the three-dimensional shopping platform display interface could be simplified and the unnecessary shopping steps could be reduced, which would be convenient for users to use and the shopping experience would be improved.

### BRIEF DESCRIPTIONS OF THE DRAWINGS

Embodiments of the present invention will now be described by way of further example only and with reference to the accompanying drawings, in which:
Figure 1 shows a structure diagram of the three-dimensional shopping platform display system in the embodiment of the present invention;
Figure 2 shows the step diagram of the editing method on the three-dimensional shopping platform display system in the embodiment of the present invention;
Figures 3 to 6 are the schematic diagrams of the process of deleting the model unit in the editing method of the three-dimensional shopping platform display interface in the embodiment of the present invention;
Figures 7 to 9 are the schematic diagrams of the process of adding model unit in the editing method of the three-dimensional shopping platform display interface in the embodiment of the present invention.

### DESCRIPTIONS OF THE PREFERRED EMBODIMENT

The present invention will be further illustrated in combination with the following figures and embodiments, but it should not be deemed as limitation of the present invention.

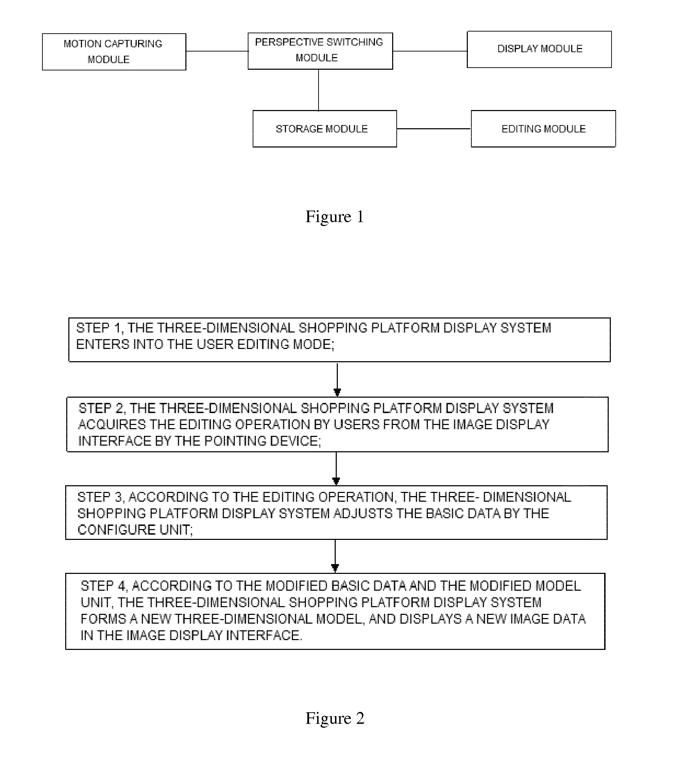

An embodiment of the present invention provides an editing method of three-dimensional shopping platform display interface for users. The three-dimensional shopping platform is displayed on the mobile terminals such as the mobile phone, the laptop computer, the tablet PC and other processing equipments by the three-dimensional shopping platform display system. As shown in Figure 1, the three-dimensional shopping platform display system comprises a motion capturing module and an angle switching module. The angle switching module is connected to the display module and the motion capturing module respectively.

The display module is used to define an image display interface with a preconfigured size on the display interface in order to present the three-dimensional shopping platform to users. Consequently, the user will have the shopping experience of three-dimensional visual effects. The image display interface is equipped on a display device of the mobile terminal which is provided with a pointing device. The size of the display interface could be adjusted according to the settings and the maximum thereof is the size of the screen of the mobile terminal display device.

The motion capturing module is used to change the relative position of the image display interface and the three-dimensional model according to the action of the operation by the user, such as the action for inputting by the input device. The three-dimensional model displayed in the image display interface could be changed by transmitting the corresponding angle switching control instruction to the angle switching module.

After receiving the angle switching control instruction from the motion capturing module, the angle switching module will adjust three-dimensional model by using the preconfigured strategy, and display the projections of the model unit in different plane states of the image display interface. Consequently, the user perspective is switched in the three-dimensional shopping platform. The switching of the user perspective on the three-dimensional shopping platform, such as the zooming of the lens and the angle conversion of the three-dimensional model such as rotation, is different from that on the traditional two-dimensional display by switching the pages. Consequently, the realistic of the shopping experience could be more improved for users.

The three-dimensional shopping platform display system comprises a memory module which is preconfigured with model unit of the three-dimensional shopping platform. Generally, the model unit is fixed and unalterable for the users of the mobile terminals. However, the manufacturer can update and adjust the model unit correspondingly according to the demands. In a three-dimensional shopping platform, the model unit is generally relevant to the stores of the online platform. It is according to but not limited to the shop, such as the cinema, the hospital and the bank. In addition, it also can be relevant to some decorative entities such as fountains, flowers to improve the visual effects of the three-dimensional shopping platform. The memory module further comprises basic data used for assembling the said model unit to form the specific three-dimensional model. This basic data which is different from the model unit above is editable for users. The users of the mobile terminal can edit the three-dimensional shopping platform display interface according the editable basic data. The three-dimensional shopping platform display system is defined as the different three-dimensional model according to the basic data and the model unit and displays the three-dimensional model on the display interface of the mobile terminal. The three-dimensional model of the present invention is a virtual three-dimensional model which is the description of the three-dimensional objects and is not real existed.

The three-dimensional shopping platform display system also comprises a communication module. The three-dimensional shopping platform is connected with the external server remotely by the communication module. The external server stores the terminal information of different mobile terminals. The terminal information comprises the terminal identification of the mobile terminals and the basic data relevant to the terminal identification. As the basic data edited by users on each mobile terminal are different, the three-dimensional models displayed are not the same. The external server should be corresponded to the basic data according to the terminal identification of different mobile terminals. Thus the three-dimensional shopping platform display system could store the basic data into the external server by the communication module in order to perform the remote backups and read the stored basic data from the external server.

The memory module of the three-dimensional shopping platform display system stores the basic data in local; and the basic data is used to be assembled with the model unit to form the three-dimensional model. Therefore, when the mobile terminal can not be connected to the external server, the creation of the three-dimensional model can be achieved by the basic data stored in local.

The three-dimensional shopping platform display system also comprises an editing module which comprises a configure unit for setting the basic data. By the editing module, the modification of the basic data could be realized according to the editing operation by users, which further edits the three-dimensional model.

Figure 2 shows a specific embodiment of the present invention. The method of editing the three-dimensional shopping platform display interface specifically includes the following steps:
Step 1, the three-dimensional shopping platform display system enters into the user editing mode;
Step 2, the three-dimensional shopping platform display system acquires the editing operation by users from the image display interface by the pointing device;
Step 3, according to the editing operation, the three-dimensional shopping platform display system adjusts the basic data by the configure unit;
Step 4, according to the modified basic data and the modified model unit, the three-dimensional shopping platform display system forms a new three-dimensional model, and displays a new image data in the image display interface.

In Step 1, alternatively, the display module defines an operation area used for receiving the selection instruction of users on the user display interface. When sensing the operation of selecting made by users in that area, the three-dimensional shopping platform display system will perform the editing mode according to the selection instruction made by users. As a result, the process of editing on the three-dimensional shopping platform display system will be performed subsequently.

Based on the above embodiment, there is a preferred embodiment that the three-dimensional model is edited before performing the editing mode. In the three-dimensional shopping platform of the present invention, the three-dimensional model may comprise all the model units. For the three-dimensional shopping platform, all the stores are set in one block. Then the operation of selecting would be performed by scaling or rotating functions of the perspective switching module. However, it will cause a high occupied system resource of the mobile terminal, such as the memory resource. Hence, it is possible to set a plurality of three-dimensional models, and each three-dimensional model forms a block to manage the stores according to the classification. This will not only be able to effectively reduce the overhead of the system resource, but also make users manage the blocks effectively, which is convenient for shopping. For example, the three-dimensional model relevant to one block could be set as a clothing block, while the three-dimensional model relevant to another block could be set as a food block. The switch between the blocks could be performed by changing the scenes. Therefore, according to these settings, there is a corresponding way to perform the editing mode. Firstly, choosing the three-dimensional models which require users to edit by changing the scenes. Next, performing the editing mode and editing the current three-dimensional model according to the selecting instruction of the operating area on the display interface.

For Step 2, alternatively, the pointing device comprises a track determining component and the pointing device determines the direction of the track of the editing operation by the track determining component. Therefore the three-dimensional shopping platform display system could get the position and track information of the editing operation of users by the pointing device.

For Step 3, alternatively, there is a plurality of configuring several identification areas which is relevant to the model unit of the three-dimensional model on the image display interface. The identification areas are used to determine the position of the editing operation and then to perform the following editing operation.

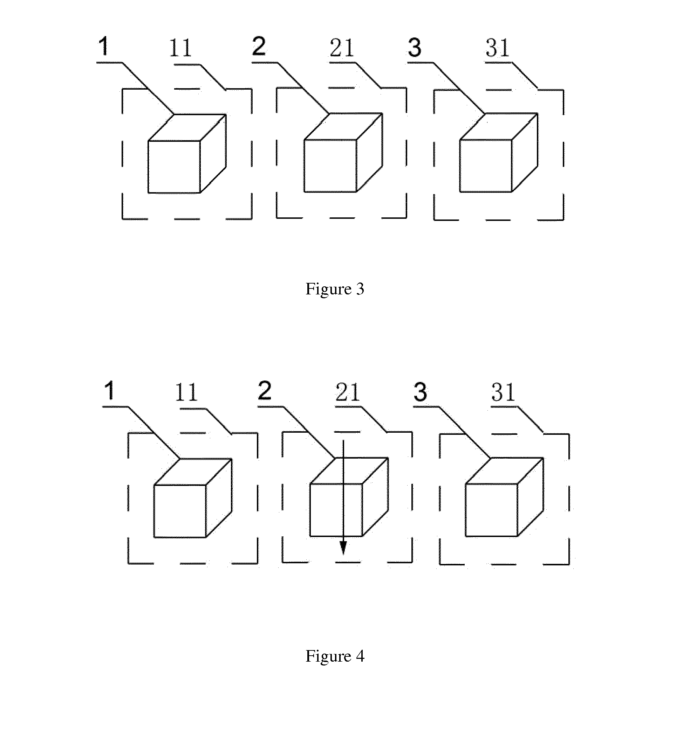

If users regard the stores relevant to the model unit as unneeded, for example, if the products in the stores are not be concerned by users, the model unit of the three-dimensional model could be deleted. When the model unit of the three-dimensional model needs to be deleted, it can be determined if the editing operation matches the preconfigured delete conditions. Specifically, the three-dimensional shopping platform display system determines whether the editing operation locates in the identification area or not and determines whether the track of the editing operation matches the first preconfigured operation or not by the pointing device. In Figure 3, Model Units 1, 2 and 3 are displayed on the image display interface. Model Unit 1 corresponds to Identification Area 11 represented by dashed boxes, Model Unit 2 corresponds to Identification Area 21 represented by dashed boxes and Model Unit 3 corresponds to Identification Area 31 represented by dashed boxes. In Figure 4, the arrow indicates the users' editing operation and the direction of the arrow indicates the direction of its operation. The three-dimensional shopping platform display system gets the related information of the editing operation which comprises the location and track by the pointing device. For the position information of the editing operation, the three-dimensional shopping platform display system can determine if the starting position is in the identification area by the pointing device. If the starting position is in the identification area, the editing operation is located in an identification area.

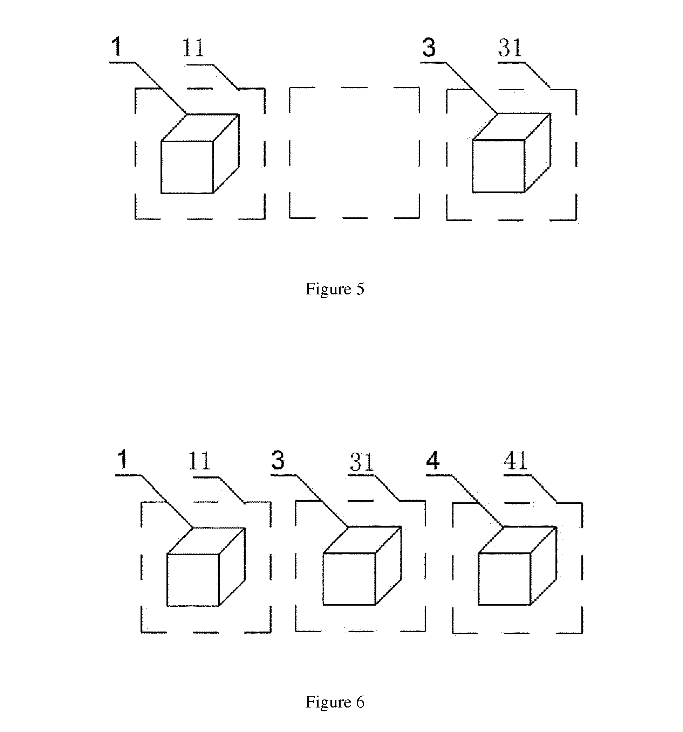

In Figure 4, as the starting position of the editing operation represented by the arrow is in Identification Area 21, the three-dimensional shopping platform display system determines that the editing operation is in Identification Area 21 by the pointing device. For the track of editing operation, it is able to determine if it matches the first preconfigured operation by the track determining component of the pointing device. Preferably, the direction of the first preconfigured operation is downward. Specifically, it may be substantially vertically downward. Therefore, it is able to represent the delete operation of the model unit by a visual action of downward pressure for users and the first preconfigured operation can be other operations as well. In Figure 4, as the direction of the editing operation is the direction of the arrow, its track matches the first preconfigured operation. At that time, the three-dimensional shopping platform display system would change the basic data by the configure unit in order to delete the model unit relevant to the identification area on the three-dimensional model. As shown in Figure 5, deleting the original Model Unit 2 in the three-dimensional model and correspondingly adjusting the position of the other model unit on the three-dimensional model in the image display interface. An alternative embodiment as shown in Figure 6 is to keep the position of Model Unit 1 stay and shift Model Unit 3 and all the model units which are located in the right side of Model Unit 3 including Model Unit 4 for a left position. Likewise, it can also keep the position of Model Unit 3 stay and shift Model Unit 1 and all the model unit which are located in the left side of the Model Unit 1 for a right position. The method as stated above is just an example of the preconfigured mode about adjusting the position of the model unit. To those skilled in the art, there are many other preconfigured modes of adjusting the position of the model unit. So the preconfigured mode of adjusting the position of the model unit in the present embodiment does not limit the present invention. The preconfigured mode of adjusting the position of the model unit will be described in detail as follows.

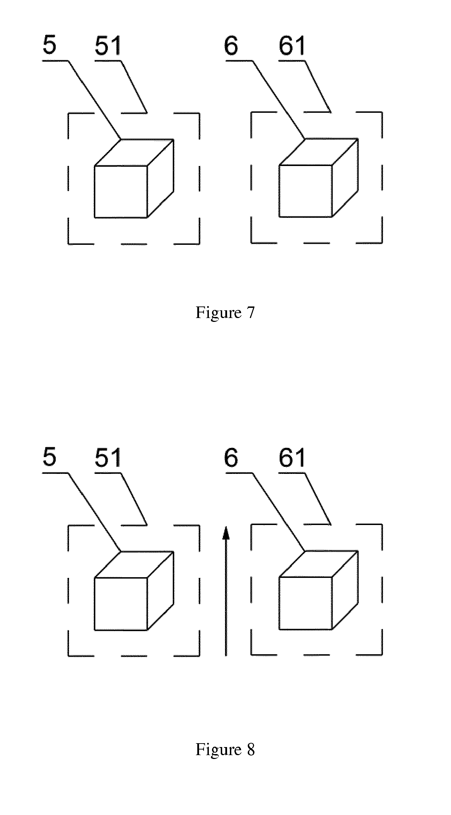

On the other hand, if the user likes to add some stores in the three-dimensional models of the corresponding blocks according to the demand in order to facilitate the operation when shopping, the adding operation of the model unit can be performed. When the operation of adding the model unit on the three-dimensional model is needed to be performed, it is possible to determine whether the editing operation matches the preconfigured newly created conditions by the pointing device. Specifically, it is possible to determine whether the editing operation is performed in the identification area and its track matches the second preconfigured operation by the pointing device. In Figure 7, Model Units 5 and 6 are displayed in the image display interface. Model Unit 5 comprises the corresponding Identification Area 51 represented by the dashed boxes and Model Unit 6 comprises the corresponding Identification Area 61 represented by the dashed boxes.

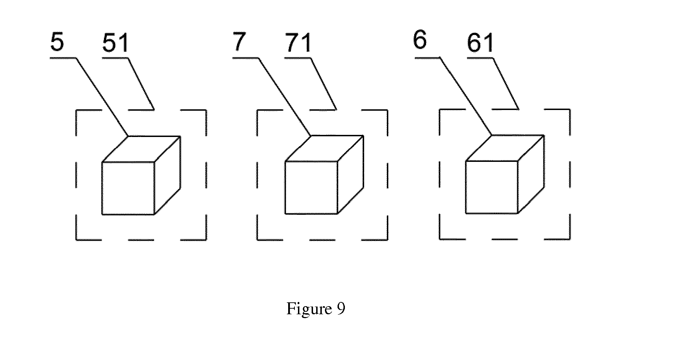

As shown in Figure 8, the arrow indicates the users' editing operation and the direction of the arrow indicates the direction of its operation. Similar to the delete operation above, by the pointing device, the related information of the editing operation can be acquired by the same judgment; the related information comprises the position information and track information. As for the problem whether the direction of operation track matches the second preconfigured operation, a preferred embodiment is that the track direction of the second preset operation is upward. Specifically, the direction could be substantially vertically upward. For users, it can use the visual action of pulling up to represent the adding operation of the model unit, and the second preconfigured operation certainly can be other operations. As shown in Figure 8, as the editing operation is between Identification Area 51 and Identification Area 61 and the direction is upright as the direction of the arrow shown in the figure, which matches the second preconfigured operation. Hence, the three-dimensional shopping platform display system changes the basic data by the configure unit so that the model unit is added in the related position between the corresponding identification areas and the position of the other model unit on the three-dimensional model in the image display interface is adjusted correspondingly. As shown in Figure 9, a Model Unit 7 is added between Model Units 5 and 6. An alternative embodiment is that the position of Model Unit 5 is not changed while Model Unit 6 and the model unit which is located in the right side of Model Unit 6 shift for a right position. Therefore, Model Unit 7 which corresponds to Identification Area 71 is added in the modified three-dimensional model. A similar embodiment is that the position of Model Unit 6 is not changed while Model Unit 5 and the model unit which is located in the left side of Model Unit 5 shift for a left position. Similar to the preconfigured operation of the delete operation of adjusting the model unit, there are many preconfigured modes for adding the adjustment of the model unit which will be described as follows.

In Step 4, the three-dimensional model arranges the model unit in rows and columns in a specific embodiment. The arrangement constitutes the positional relationship between the model unit of the three-dimensional model. In the above specific embodiment, when the three-dimensional shopping platform display system deletes the model unit on the three-dimensional models, according to the position of the deleted model unit in rows and columns the three-dimensional shopping platform display system has four preconfigured modes which are that as follows: the model unit which belongs to the same column with the deleted model unit and is located behind the deleted model unit moves forward for a preconfigured distance; or the model unit which belongs to the same column with the deleted model unit and is located at the front of the deleted model unit moves rearward for a preconfigured distance; or the model unit which belongs to the same column with the deleted model unit and is located in the left side of the deleted model unit moves for a preconfigured distance toward the right; or the model unit which belongs to the same column with the deleted model unit and is located in the right side of the deleted model unit moves for a preconfigured distance toward the left. Preferably, the preconfigured distance generally may be a position of a model unit in order to fill the position of the deleted model unit and to maintain the three-dimensional model compact. Correspondingly, when the model unit of the three-dimensional model needs to be added on the three-dimensional shopping platform display system, similarly, according to the position of the added model unit in rows and columns, there could be four preconfigured modes as follows: the model unit which belongs to the same column with the added model unit and is located behind the added model unit moves rearward for a preconfigured distance; or the model unit which belongs to the same column with the added model unit and is located at the front of the added model unit moves forward for a preconfigured distance; or the model unit which belongs to the same column with the added model unit and is located in the left side of the added model unit moves for a preconfigured distance toward the left; or the model unit which belongs to the same column with the added model unit and is located in the right side of the added model unit moves for a preconfigured distance toward the right.

In the specific embodiment above, there is a preferred embodiment. A demonstration unit is set in the editing module and the three-dimensional shopping platform display system represents the changes of the position of the model unit in the new modified three-dimensional model according to the preconfigured mode in the image display interface by the demonstration unit. There are two categories of manifestations of the demonstration unit. One is updating in an instantly refreshing way which displays the new three-dimensional model formed by editing directly on the display device of the mobile terminals; the other is updating in a dynamic and mobile way, i.e., in each preconfigured unit time, each model unit moves to the intended target within a period of time according to the distance of the movement of the model unit to display the change of the three-dimensional model which is edited in a dynamic display way of the distance of the movement according to the partition of the unit time.

The editing method of the three-dimensional shopping platform display interface for users of the present invention is convenient for users to set the three-dimensional shopping platform display interface as required by the mobile terminal according to the demand of users. Consequently, the editability of the three-dimensional shopping platform display interface for users is realized. Thus, it is able to simplify the three-dimensional shopping platform display interface, reduce the unnecessary shopping steps, facilitate the use of the three-dimensional shopping platform for users and increase the user's shopping experience which has the wide application prospects.

Although a typical embodiment of a particular structure of the specific implementation way has been given with the above description and the figures, it is appreciated that other changes based on the spirit of this invention may also be made. Though the preferred embodiments are proposed above, these contents will never be the limitation of this invention.

It is obvious for the skilled in the art to make varieties of changes and modifications after reading the above descriptions. Hence, the Claims attached should be regarded as all the changes and modifications which cover the real intention and the range of this invention. Any and all equivalent contents and ranges in the range of the Claims should be regarded belonging to the intention and the range of this invention.

## Claims

1. An editing method of the three-dimensional shopping platform display interface for users, the three-dimensional shopping platform is displayed on the mobile terminals by a three-dimensional shopping platform display system, wherein the three-dimensional shopping platform display system comprises a three-dimensional model;
the three-dimensional shopping platform display system comprises a display module which is defined with an image display interface with a preconfigured size; the image display interface is configured on a display device of the mobile terminal which is provided with a pointing device;
the three-dimensional shopping platform display system comprises a memory module which is preconfigured with Model Unit (1, 2, 3, 4, 5, 6) of the three-dimensional shopping platform and the basic data for assembling the three-dimensional model; the three-dimensional shopping platform display system forms different three-dimensional models according to the basic data and Model Unit (1, 2, 3, 4, 5, 6);
the three-dimensional shopping platform display system comprises an editing module which comprises a configure unit for configuring the basic data;
the editing method of the three-dimensional shopping platform display interface includes the following steps:
Step 1, the three-dimensional shopping platform display system enters into the user editing mode;
Step 2, the three-dimensional shopping platform display system acquires the user's editing operation from the image display interface by the pointing device;
Step 3, according to the editing operation, the three-dimensional shopping platform display system adjusts the basic data by the configure unit;
Step 4, according to the modified basic data and the modified model unit (1, 3, 4, 5, 6, 7), the three-dimensional shopping platform display system forms a new three-dimensional model, and displays the new image data in the image display interface.

2. The editing method as disclosed in Claim 1, wherein the memory module of the three-dimensional shopping platform display system stores the basic data used for assembling the three-dimensional model with local Model Unit (1, 2, 3, 4, 5, 6, 7).

3. The editing method as disclosed in Claim 1, wherein the three-dimensional shopping platform display system further comprises a communication module; the three-dimensional shopping platform is connected with the external server remotely by the communication module; the external server stores the terminal information of different mobile terminals; the terminal information comprises the terminal identification of the mobile terminal and the basic data relevant to the terminal identification.

4. The editing method as disclosed in Claim 1, wherein the display module is defined with an operating area used for receiving the selection instruction of users in the display interface;
Step 1 specifically includes:
Step 11, the operating area receives the selection instruction of users by the pointing device;
Step 12, the three-dimensional shopping platform display system enters into the user editing mode according to the selection instruction of users.

5. The editing method as disclosed in Claim 1, wherein the pointing device comprises a track determining component, the pointing device determines the direction of the track of the editing operation by the track determining component.

6. The editing method as disclosed in Claim 1, wherein the editing module further comprises a demonstration unit; Step 4 includes the following steps:
Step 41, the three-dimensional shopping platform display system forms a new three-dimensional model according to modified basic data and Model Unit (1, 3, 4, 5, 6, 7);
Step 42, the three-dimensional shopping platform display system displays the changes of the position of Model Unit (1, 3, 4, 5, 6, 7) on the new three-dimensional model in the preconfigured mode by the demonstration unit on the image display interface.

7. The editing method as disclosed in Claim 5, wherein the image display interface is defined with a plurality of identification areas (11, 21, 31, 41, 51, 61, 71) relevant to Model Unit (1, 2, 3, 4, 5, 6, 7) of the three-dimensional model;
when the pointing device determines that the editing operation is located in the identification areas (11, 21, 31, 41, 51, 61, 71) and the track of the operation thereof matches the first preconfigured operation, the three-dimensional shopping platform display system changes the basic data by the configure unit; the three-dimensional shopping platform display system deletes the model unit (2) relevant to the identification area (21) on the three-dimensional model and correspondingly adjusts the position of the other model unit on the three-dimensional model in the image display interface.

8. The editing method as disclosed in Claim 5, wherein the image display interface is defined with a plurality of identification areas (11, 21, 31, 41, 51, 61, 71) relevant to the display area of the model unit (1, 2, 3, 4, 5, 6, 7);
when the pointing device determines that the editing operation is located between the identification areas (11, 21, 31, 41, 51, 61, 71) and the track of the operation thereof matches the second preconfigured operation, the three-dimensional shopping platform display system changes the basic data by the configure unit; the three-dimensional shopping platform display system adds the Model Unit (7) at the corresponding position on the three-dimensional model between the corresponding identification areas (51, 61) and adjusts the position on the three-dimensional model of the other model unit in the image display interface correspondingly.

9. The editing method as disclosed in Claim 6, wherein the model unit (1, 2, 3, 4, 5, 6, 7) is arranged in ranks on the three-dimensional models; the preconfigured mode of Step 42 is that when the three-dimensional shopping platform display system deletes the model unit (2) on the three-dimensional model,
the model unit (2) which belongs to the same column with the deleted model unit and is located behind the deleted model unit moves forward for a preconfigured distance; or
the model unit (2) which belongs to the same column with the deleted model unit and is located at the front of the deleted model unit moves rearward for a preconfigured distance; or
the model unit (2) which belongs to the same column with the deleted model unit and is located in the left side of the deleted model unit moves for a preconfigured distance toward the right; or
the model unit (2) which belongs to the same column with the deleted model unit and is located in the right side of the deleted model unit moves for a preconfigured distance toward the left.

10. The editing method as disclosed in Claim 6, wherein the model unit is arranged in ranks on the three-dimensional models; the preconfigured mode of Step 42 is that when the three-dimensional shopping platform display system adds the model unit (7) on the three-dimensional model,
the model unit (7) which belongs to the same column with the added model unit and is located behind the added model unit moves rearward for a preconfigured distance; or
the model unit (7) which belongs to the same column with the added model unit and is located at the front of the added model unit moves forward for a preconfigured distance; or
the model unit (7) which belongs to the same column with the added model unit and is located in the left side of the added model unit moves for a preconfigured distance toward the left; or
the model unit (7) which belongs to the same column with the added model unit and is located in the right side of the added model unit moves for a preconfigured distance toward the right.

11. The editing method as disclosed in Claim 7, wherein the direction of the first preconfigured operation is downward to the track direction of the editing operation.

12. The editing method according to claim 8, wherein the direction of the second preconfigured operation is upward to the track direction of the editing operation.
